# EUROPEAN PATENT APPLICATION

(11) **EP 4 414 769 A1**
(43) Date of publication of application: **14.08.2024**
(21) Application number: 24155264.5
(22) Date of filing: 01.02.2024
(51) Int. Cl.: G02B 27/00, G02B 27/01, G02B 26/08, G02B 5/30, G02B 26/10, G02B 17/02

(54) **FOLDED BEAM TWO-DIMENSIONAL (2D) BEAM SCANNER**

(30) Priority: 10.02.2023 US 202318108358
(71) Applicant: Meta Platforms Technologies, LLC, Menlo Park, CA 94025 (US)
(72) Inventor: Patterson, Keith, Menlo Park (US); Wheelwright, Brian, Menlo Park (US); Greif, Daniel Guenther, Menlo Park (US); Kelly, Kieran, Menlo Park (US); Chi, Wanli, Menlo Park (US); Lam, Wai Sze Tiffany, Menlo Park (US); Jorabchi, Kavous, Menlo Park (US)
(74) Representative: Murgitroyd & Company

(57) **Abstract**

A folded beam scanner assembly that reduces distance between microelectromechanical system (MEMS) and waveguide display is described. In one configuration, a guiding prism mounted close the MEMS reflector and a special optical filter that blocks ghost light path may be employed. In another configuration, polarizer plates may be used in addition to the ghost light path blocking filter. In yet another configuration, the ghost light path blocking filter may be eliminated using diagonal reflectors instead. The output (scanned) light beam is spatially separated from the input optical beam via polarization-selective reflectors. The separation obviates a need in geometrical separation of the beams by oblique angles of incidence, resulting in a compact configuration providing a nearly straight angle of incidence at the tiltable reflector when the reflector is in a center (non-tilted) angular position.

## Description

### TECHNICAL FIELD

This patent application relates generally to visual display devices, and in particular to a folded beam scanner assembly that reduces a distance between a micro-electromechanical system (MEMS) and a waveguide display in a near-eye display device.

### BACKGROUND

With recent advances in technology, prevalence and proliferation of content creation and delivery has increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

To facilitate delivery of this and other related content, service providers have endeavored to provide various forms of wearable display systems. One such example may be a head-mounted display (HMD) device, such as a wearable eyewear, a wearable headset, or eyeglasses. In some examples, the head-mounted display (HMD) device may project or direct light to may display virtual objects or combine images of real objects with virtual objects, as in virtual reality (VR), augmented reality (AR), or mixed reality (MR) applications. For example, in an AR system, a user may view both images of virtual objects (e.g., computer-generated images (CGIs)) and the surrounding environment. Head-mounted display (HMD) devices require compact and efficient components and modules such as light sources, image projectors, beam scanners, etc., that would have low image artifacts.

### SUMMARY

According to a first aspect, there is provided an apparatus, comprising: a light source to provide an input light beam; a two-dimensional (2D) beam scanner optically coupled to the light source, the 2D beam scanner to: receive the input light beam; perform a biresonant scan of the input light beam; and generate a light field based on the biresonant scan; an optical assembly comprising a plurality of optical elements, the optical elements to collimate and fold the input light beam toward the 2D beam scanner; and a reflective polarizer to receive the scanned light beam from the 2D beam scanner and to provide to a pupil replicating waveguide.

The 2D beam scanner may be a micro-electromechanical system (MEMS) reflector based scanner.

The apparatus may further comprise a quarter wave plate (QWP) to modify a polarization of the scanned light beam.

The reflective polarizer and the QWP may be arranged as one of: a substrate, the QWP, and the reflective polarizer; the QWP, the substrate, and the reflective polarizer; or the QWP, the reflective polarizer, and the substrate. As such, the order of the elements may be as listed, from an eye side or from a world side of the apparatus.

An arrangement of the substrate, the QWP, and the reflective polarizer may be to receive a left hand circularly polarized light beam and provide a vertical linear polarized light beam to the pupil replicating waveguide.

The QWP may be disposed on a surface of a tiltable reflector of a micro-electromechanical system (MEMS) reflector based scanner. The reflective polarizer may be arranged with a substrate aligned with a planar surface of the pupil replicating waveguide.

An arrangement of the substrate, the QWP, and the reflective polarizer may be to receive a horizontal linear polarized light beam and provide a vertical linear polarized light beam to the pupil replicating waveguide.

The apparatus may further comprise a ghost path blocking filter positioned in an optical path between the reflective polarizer and the pupil replicating waveguide to block light following at least one ghost path from the 2D beam scanner to the pupil replicating waveguide.

The optical assembly may comprise at least one guiding prism to fold the input light beam and/or at least one collimating lens to collimate the input light beam.

The light source may comprise one of a side-emitting laser diode, a vertical-cavity surface-emitting laser diode, a superluminescent light-emitting diode, a light-emitting diode, or a photonic integrated circuit.

According to a second aspect, there is provided a near-eye display device, comprising: a pupil replicating waveguide to provide an image on an eye box; a projector optically coupled to the pupil replicating waveguide, the projector comprising the apparatus of the first aspect.

The light source, the 2D beam scanner, and the optical assembly may be arranged to be placed on an eye side surface of at least one temple of the near-eye display device.

The light source, the 2D beam scanner, and the optical assembly may be arranged such that the 2D beam scanner is placed on a world side surface of at least one temple of the near-eye display device and the light source and the optical assembly are placed on an eye side surface of the at least one temple of the near-eye display device.

The optical assembly may comprise: a first diagonal window to receive the folded input light beam from a first guiding prism and to provide to a second guiding prism; and a second diagonal window to provide the folded input light beam from the second guiding prism to the 2D beam scanner and to pass through the light beam reflected by the 2D beam scanner to the pupil replicating waveguide.

The reflective polarizer may be disposed on a surface of the second diagonal window facing the pupil replicating waveguide.

According to a third aspect, there is provided a method, comprising: generating an input light beam at a light source of a scanning projector; collimating and folding the input light beam toward a reflector of a micro-electromechanical system (MEMS) reflector based scanner; scanning the light beam, at MEMS reflector based scanner, about a first axis and a second axis while varying a brightness of the input light beam; passing the scanned light beam through a reflective polarizer to a pupil replicating waveguide; and generating a light field on an eye box through the scanned light beam, by the pupil replicating waveguide, to provide an image to a viewer through the eye box.

The method may further comprise blocking ghost path rays by a volume Bragg grating (VBG) notch filter disposed between the reflective polarizer and the pupil replicating waveguide.

The method may further comprise modifying a polarization of the scanned light beam at a quarter wave plate (QWP).

Any feature discussed with reference to the first or second aspect may equally be included in the third aspect.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.
Figure 1 illustrates a block diagram of an artificial reality system environment including a near-eye display, according to an example.
Figure 2 illustrates a perspective view of a near-eye display in the form of a head-mounted display (HMD) device, according to an example.
Figures 3A and 3B illustrate a perspective view and a top view of a near-eye display in the form of a pair of glasses, according to an example.
Figure 4A illustrates a schematic view of a near-eye display based on a scanning image projector, according to an example.
Figure 4B illustrates a schematic view of a scanning image projector of the near-eye display of FIG. 4A, where the scanning image projector uses a 2D tiltable micro-electromechanical system (MEMS) reflector, according to an example.
Figure 5 illustrates a side cross-sectional view of a micro-electromechanical system (MEMS) reflector based scanner including a reflective polarizer and a beam-folding mirror, according to an example.
Figure 6A illustrates a side cross-sectional view of a micro-electromechanical system (MEMS) reflector based scanner including a polarizing beam splitter (PBS) and a guiding prism for routing an optical beam between an image-replicating waveguide and the MEMS scanner, according to an example.
Figure 6B illustrates a side cross-sectional view of a micro-electromechanical system (MEMS) reflector based scanner including a polarizing beam splitter (PBS), a guiding prism, and a beam-folding mirror for routing an optical beam around an image-replicating waveguide, according to an example.
Figure 6C illustrates a side cross-sectional view of a micro-electromechanical system (MEMS) reflector based scanner including a polarizing beam splitter (PBS), two mirrors, and two prisms for routing an optical beam between an image-replicating waveguide and the MEMS scanner, according to an example.
Figure 7A illustrates a Volume Bragg grating (VBG), according to an example.
Figure 7B illustrates a volume Bragg grating (VBG) notch filter to block ghost path rays, according to an example.
Figures 8A-8E illustrate different configurations of a quarter wave plate (QWP), a reflective polarizer, and a micro-electromechanical system (MEMS) mirror, according to examples.
Figure 9 is a flow diagram illustrating an example method for providing collimated and folded light to a pupil replicating waveguide through a micro-electromechanical system (MEMS) reflector based scanner, according to some examples.

### DETAILED DESCRIPTION

For simplicity and illustrative purposes, the present application is described by referring mainly to examples thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

Virtual reality (VR) and augmented reality (AR) displays may offer a significantly wider field of view (FOV) than traditional displays, creating an immersive experience for a user. A projector display may be used with an X- and Y- tiltable reflector, or a pair of unidirectionally tiltable reflectors, to scan an image-forming light beam across the display's field of view (FOV). Operating the tiltable reflector(s) near mechanical oscillation resonance(s) provides fast scanning rates with less energy consumption in comparison with raster-type scanning. Since a fast scanner consumes a considerable amount of energy, the biresonant scanning may be preferred as it allows considerable power savings.

A tiltable reflector may be used to scan a light beam emitted by a light source to form an image in angular domain for direct observation by a user of a near-eye display. As the light beam is scanned, the brightness and/or color of the scanned light beam may be varied in coordination with the scanning, in accordance with corresponding pixels of the image being displayed. The entire image is formed when the light beam is scanned in two dimensions, e.g. over X- and Y-viewing angles, over the entire frame or field of view (FOV) of the user. When the frame rate is high enough, the eye integrates the scanned light beam, enabling the user to see the displayed imagery substantially without flicker.

In some examples of the present disclosure, a folded beam scanner assembly that reduces distance between micro-electromechanical system (MEMS) and waveguide display is described. In one configuration, where the laser source and the micro-electromechanical system (MEMS) reflector are on the eye side (inside the temple of the glasses), a guiding prism mounted close the micro-electromechanical system (MEMS) reflector and a special optical filter that blocks ghost light path may be employed. In another configuration, where the micro-electromechanical system (MEMS) is on the world side (outside the temple of the glasses), polarizer plates may be used in addition to the ghost light path blocking filter. In yet another configuration, the ghost light path blocking filter may be eliminated. Various configurations provide a compact 2D scanning display system with enhanced display properties, where the output (scanned) light beam may be spatially separated from the input optical beam by polarization. The separation may obviate a need in geometrical separation of the beams by oblique angles of incidence, resulting in a compact configuration providing a nearly straight angle of incidence at the tiltable reflector when the reflector is in a center (non-tilted) angular position. Low obliquity of the impinging light beam may enable the scanning range to be utilized more efficiently.

In some examples, multi-ridge sources may be combined with 2D micro-electromechanical system (MEMS) reflector based folded beam scanning and provide enhanced display resolution, refresh rate, and/or field of view (FOV). Whereas, employing a single-ridge source, display resolution, refresh rate, and/or field of view (FOV) may be limited.

While some advantages and benefits of the present disclosure are apparent, other advantages and benefits may include reduction of ghost light path caused image artifacts and reduction of size of the projector assembly, while keeping the energy-saving advantages of biresonant scanning of a tiltable reflector as noted herein.

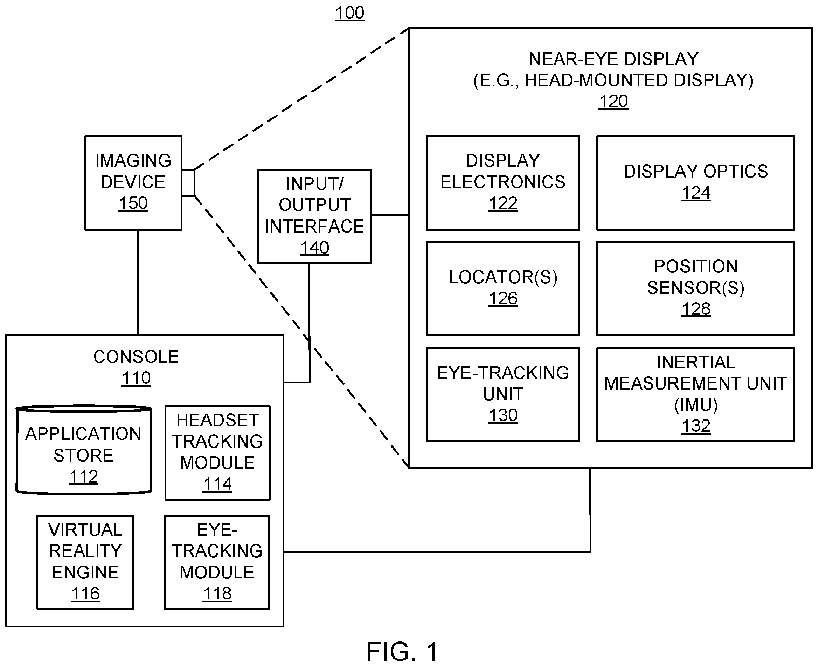

Figure 1 illustrates a block diagram of an artificial reality system environment 100 including a near-eye display, according to an example. As used herein, a "near-eye display" may refer to a device (e.g., an optical device) that may be in close proximity to a user's eye. As used herein, "artificial reality" may refer to aspects of, among other things, a "metaverse" or an environment of real and virtual elements and may include use of technologies associated with virtual reality (VR), augmented reality (AR), and/or mixed reality (MR). As used herein a "user" may refer to a user or wearer of a "near-eye display."

As shown in Figure 1, the artificial reality system environment 100 may include a near-eye display 120, an optional external imaging device 150, and an optional input/output interface 140, each of which may be coupled to a console 110. The console 110 may be optional in some instances as the functions of the console 110 may be integrated into the near-eye display 120. In some examples, the near-eye display 120 may be a head-mounted display (HMD) that presents content to a user.

In some instances, for a near-eye display system, it may generally be desirable to expand an eye box, reduce display haze, improve image quality (e.g., resolution and contrast), reduce physical size, increase power efficiency, and increase or expand field of view (FOV). As used herein, "field of view" (FOV) may refer to an angular range of an image as seen by a user, which is typically measured in degrees as observed by one eye (for a monocular head-mounted display (HMD)) or both eyes (for binocular head-mounted displays (HMDs)). Also, as used herein, an "eye box" may be a two-dimensional region that may be positioned in front of the user's eye from which a displayed image from an image source may be viewed.

In some examples, in a near-eye display system, light from a surrounding environment may traverse a "see-through" region of a waveguide display (e.g., a transparent substrate) to reach a user's eyes. For example, in a near-eye display system, light of projected images may be coupled into a transparent substrate of a waveguide, propagate within the waveguide, and be coupled or directed out of the waveguide at one or more locations to replicate exit pupils and expand the eye box.

In some examples, the near-eye display 120 may include one or more rigid bodies, which may be rigidly or non-rigidly coupled to each other. In some examples, a rigid coupling between rigid bodies may cause the coupled rigid bodies to act as a single rigid entity, while in other examples, a non-rigid coupling between rigid bodies may allow the rigid bodies to move relative to each other.

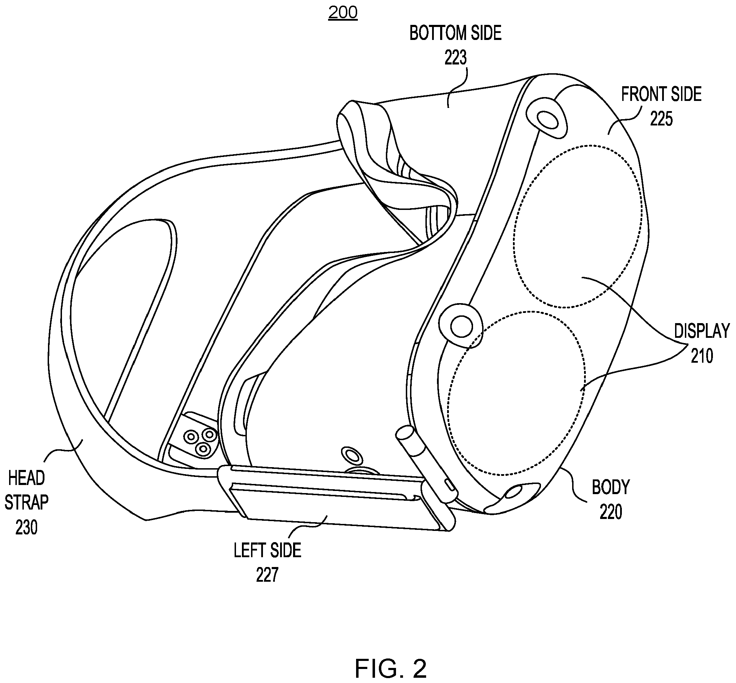

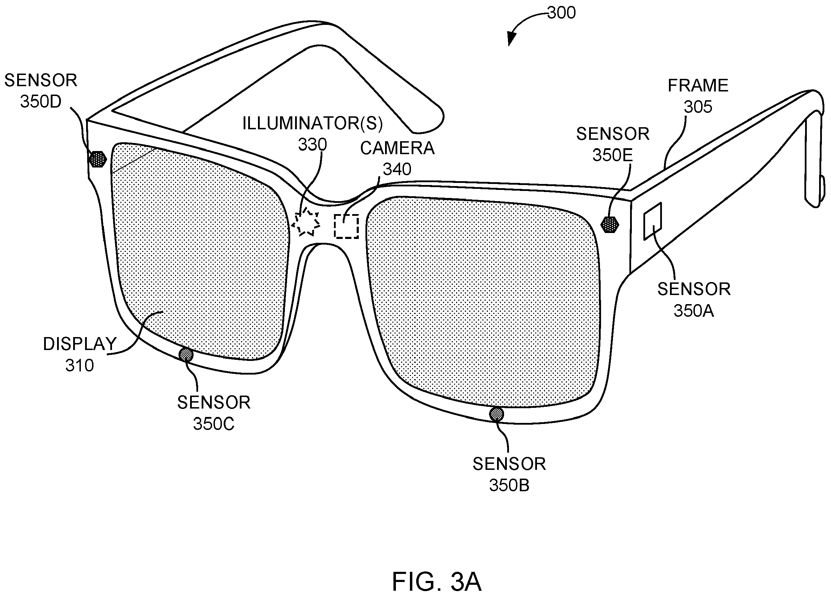

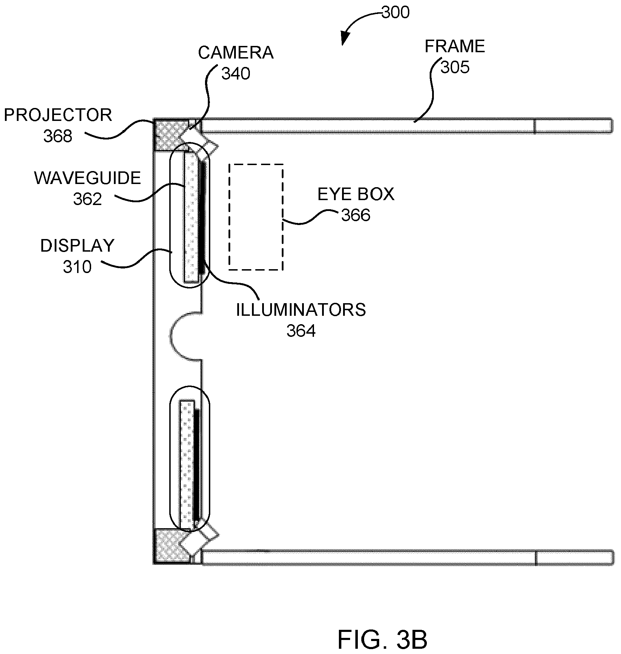

In some examples, the near-eye display 120 may be implemented in any suitable form-factor, including a head-mounted display (HMD), a pair of glasses, or other similar wearable eyewear or device. Examples of the near-eye display 120 are further described below with respect to Figures 2 and 3. Additionally, in some examples, the functionality described herein may be used in a head-mounted display (HMD) or headset that may combine images of an environment external to the near-eye display 120 and artificial reality content (e.g., computer-generated images). Therefore, in some examples, the near-eye display 120 may augment images of a physical, real-world environment external to the near-eye display 120 with generated and/or overlaid digital content (e.g., images, video, sound, etc.) to present an augmented reality to a user.

In some examples, the near-eye display 120 may include any number of display electronics 122, display optics 124, and an eye-tracking unit 130. In some examples, the near-eye display 120 may also include one or more locators 126, one or more position sensors 128, and an inertial measurement unit (IMU) 132. In some examples, the near-eye display 120 may omit any of the eye-tracking unit 130, the one or more locators 126, the one or more position sensors 128, and the inertial measurement unit (IMU) 132, or may include additional elements.

In some examples, the display electronics 122 may display or facilitate the display of images to the user according to data received from, for example, the optional console 110. In some examples, the display electronics 122 may include one or more display panels. In some examples, the display electronics 122 may include any number of pixels to emit light of a predominant color such as red, green, blue, white, or yellow. In some examples, the display electronics 122 may display a three-dimensional (3D) image, e.g., using stereoscopic effects produced by two-dimensional panels, to create a subjective perception of image depth.

In some examples, the near-eye display 120 may include a projector (not shown), which may form an image in angular domain for direct observation by a viewer's eye through a pupil. The projector may employ a controllable light source (e.g., a laser source) and a micro-electromechanical system (MEMS) beam scanner to create a light field from, for example, a collimated light beam. The micro-electromechanical system (MEMS) beam scanner may "paint" the image on an eye box following a biresonant coherent pattern. Various configurations of prisms, polarizer plates, and/or ghost path blocking filters may be used to fold the beam from the light source onto the micro-electromechanical system (MEMS) beam scanner and waveguide at nearly straight angles.

In some examples, the display optics 124 may display image content optically (e.g., using optical waveguides and/or couplers) or magnify image light received from the display electronics 122, correct optical errors associated with the image light, and/or present the corrected image light to a user of the near-eye display 120. In some examples, the display optics 124 may include a single optical element or any number of combinations of various optical elements as well as mechanical couplings to maintain relative spacing and orientation of the optical elements in the combination. In some examples, one or more optical elements in the display optics 124 may have an optical coating, such as an anti-reflective coating, a reflective coating, a filtering coating, and/or a combination of different optical coatings.

In some examples, the display optics 124 may also be designed to correct one or more types of optical errors, such as two-dimensional optical errors, three-dimensional optical errors, or any combination thereof. Examples of two-dimensional errors may include barrel distortion, pincushion distortion, longitudinal chromatic aberration, and/or transverse chromatic aberration. Examples of three-dimensional errors may include spherical aberration, chromatic aberration, field curvature, and astigmatism.

In some examples, the one or more locators 126 may be objects located in specific positions relative to one another and relative to a reference point on the near-eye display 120. In some examples, the optional console 110 may identify the one or more locators 126 in images captured by the optional external imaging device 150 to determine the artificial reality headset's position, orientation, or both. The one or more locators 126 may each be a light-emitting diode (LED), a corner cube reflector, a reflective marker, a type of light source that contrasts with an environment in which the near-eye display 120 operates, or any combination thereof.

In some examples, the external imaging device 150 may include one or more cameras, one or more video cameras, any other device capable of capturing images including the one or more locators 126, or any combination thereof. The optional external imaging device 150 may be configured to detect light emitted or reflected from the one or more locators 126 in a field of view of the optional external imaging device 150.

In some examples, the one or more position sensors 128 may generate one or more measurement signals in response to motion of the near-eye display 120. Examples of the one or more position sensors 128 may include any number of accelerometers, gyroscopes, magnetometers, and/or other motion-detecting or error-correcting sensors, or any combination thereof.

In some examples, the inertial measurement unit (IMU) 132 may be an electronic device that generates fast calibration data based on measurement signals received from the one or more position sensors 128. The one or more position sensors 128 may be located external to the inertial measurement unit (IMU) 132, internal to the inertial measurement unit (IMU) 132, or any combination thereof. Based on the one or more measurement signals from the one or more position sensors 128, the inertial measurement unit (IMU) 132 may generate fast calibration data indicating an estimated position of the near-eye display 120 that may be relative to an initial position of the near-eye display 120. For example, the inertial measurement unit (IMU) 132 may integrate measurement signals received from accelerometers over time to estimate a velocity vector and integrate the velocity vector over time to determine an estimated position of a reference point on the near-eye display 120. Alternatively, the inertial measurement unit (IMU) 132 may provide the sampled measurement signals to the optional console 110, which may determine the fast calibration data.

The eye-tracking unit 130 may include one or more eye-tracking systems. As used herein, "eye tracking" may refer to determining an eye's position or relative position, including orientation, location, and/or gaze of a user's eye. In some examples, an eye-tracking system may include an imaging system that captures one or more images of an eye and may optionally include a light emitter, which may generate light that is directed to an eye such that light reflected by the eye may be captured by the imaging system. In other examples, the eye-tracking unit 130 may capture reflected radio waves emitted by a miniature radar unit. These data associated with the eye may be used to determine or predict eye position, orientation, movement, location, and/or gaze.

In some examples, the near-eye display 120 may use the orientation of the eye to introduce depth cues (e.g., blur image outside of the user's main line of sight), collect heuristics on the user interaction in the virtual reality (VR) media (e.g., time spent on any particular subject, object, or frame as a function of exposed stimuli), some other functions that are based in part on the orientation of at least one of the user's eyes, or any combination thereof. In some examples, because the orientation may be determined for both eyes of the user, the eye-tracking unit 130 may be able to determine where the user is looking or predict any user patterns, etc.

In some examples, the input/output interface 140 may be a device that allows a user to send action requests to the optional console 110. As used herein, an "action request" may be a request to perform a particular action. For example, an action request may be to start or to end an application or to perform a particular action within the application. The input/output interface 140 may include one or more input devices. Example input devices may include a keyboard, a mouse, a game controller, a glove, a button, a touch screen, or any other suitable device for receiving action requests and communicating the received action requests to the optional console 110. In some examples, an action request received by the input/output interface 140 may be communicated to the optional console 110, which may perform an action corresponding to the requested action.

In some examples, the optional console 110 may provide content to the near-eye display 120 for presentation to the user in accordance with information received from one or more of external imaging device 150, the near-eye display 120, and the input/output interface 140. For example, in the example shown in Figure 1, the optional console 110 may include an application store 112, a headset tracking module 114, a virtual reality engine 116, and an eye-tracking module 118. Some examples of the optional console 110 may include different or additional modules than those described in conjunction with Figure 1. Functions further described below may be distributed among components of the optional console 110 in a different manner than is described here.

In some examples, the optional console 110 may include a processor and a non-transitory computer-readable storage medium storing instructions executable by the processor. The processor may include multiple processing units executing instructions in parallel. The non-transitory computer-readable storage medium may be any memory, such as a hard disk drive, a removable memory, or a solid-state drive (e.g., flash memory or dynamic random access memory (DRAM)). In some examples, the modules of the optional console 110 described in conjunction with Figure 1 may be encoded as instructions in the non-transitory computer-readable storage medium that, when executed by the processor, cause the processor to perform the functions further described below. It should be appreciated that the optional console 110 may or may not be needed or the optional console 110 may be integrated with or separate from the near-eye display 120.

In some examples, the application store 112 may store one or more applications for execution by the optional console 110. An application may include a group of instructions that, when executed by a processor, generates content for presentation to the user. Examples of the applications may include gaming applications, conferencing applications, video playback application, or other suitable applications.

In some examples, the headset tracking module 114 may track movements of the near-eye display 120 using slow calibration information from the external imaging device 150. For example, the headset tracking module 114 may determine positions of a reference point of the near-eye display 120 using observed locators from the slow calibration information and a model of the near-eye display 120. Additionally, in some examples, the headset tracking module 114 may use portions of the fast calibration information, the slow calibration information, or any combination thereof, to predict a future location of the near-eye display 120. In some examples, the headset tracking module 114 may provide the estimated or predicted future position of the near-eye display 120 to the virtual reality engine 116.

In some examples, the virtual reality engine 116 may execute applications within the artificial reality system environment 100 and receive position information of the near-eye display 120, acceleration information of the near-eye display 120, velocity information of the near-eye display 120, predicted future positions of the near-eye display 120, or any combination thereof from the headset tracking module 114. In some examples, the virtual reality engine 116 may also receive estimated eye position and orientation information from the eye-tracking module 118. Based on the received information, the virtual reality engine 116 may determine content to provide to the near-eye display 120 for presentation to the user.

In some examples, the eye-tracking module 118 may receive eye-tracking data from the eye-tracking unit 130 and determine the position of the user's eye based on the eye tracking data. In some examples, the position of the eye may include an eye's orientation, location, or both relative to the near-eye display 120 or any element thereof. So, in these examples, because the eye's axes of rotation change as a function of the eye's location in its socket, determining the eye's location in its socket may allow the eye-tracking module 118 to more accurately determine the eye's orientation.

In some examples, a location of a projector of a display system may be adjusted to enable any number of design modifications. For example, in some instances, a projector may be located in front of a viewer's eye (i.e., "front-mounted" placement). In a front-mounted placement, in some examples, a projector of a display system may be located away from a user's eyes (i.e., "world-side"). In some examples, a head-mounted display (HMD) device may utilize a front-mounted placement to propagate light towards a user's eye(s) to project an image.

Figure 2 illustrates a perspective view of a near-eye display in the form of a head-mounted display (HMD) device 200, according to an example. In some examples, the head-mounted device (HMD) device 200 may be a part of a virtual reality (VR) system, an augmented reality (AR) system, a mixed reality (MR) system, another system that uses displays or wearables, or any combination thereof. In some examples, the head-mounted display (HMD) device 200 may include a body 220 and a head strap 230. Figure 2 shows a bottom side 223, a front side 225, and a left side 227 of the body 220 in the perspective view. In some examples, the head strap 230 may have an adjustable or extendible length. In particular, in some examples, there may be a sufficient space between the body 220 and the head strap 230 of the head-mounted display (HMD) device 200 for allowing a user to mount the head-mounted display (HMD) device 200 onto the user's head. For example, the length of the head strap 230 may be adjustable to accommodate a range of user head sizes. In some examples, the head-mounted display (HMD) device 200 may include additional, fewer, and/or different components.

In some examples, the head-mounted display (HMD) device 200 may present, to a user, media or other digital content including virtual and/or augmented views of a physical, real-world environment with computer-generated elements. Examples of the media or digital content presented by the head-mounted display (HMD) device 200 may include images (e.g., two-dimensional (2D) or three-dimensional (3D) images), videos (e.g., 2D or 3D videos), audio, or any combination thereof. In some examples, the images and videos may be presented to each eye of a user by one or more display assemblies (not shown in Figure 2) enclosed in the body 220 of the head-mounted display (HMD) device 200.

In some examples, the head-mounted display (HMD) device 200 may include various sensors (not shown), such as depth sensors, motion sensors, position sensors, and/or eye tracking sensors. Some of these sensors may use any number of structured or unstructured light patterns for sensing purposes. In some examples, the head-mounted display (HMD) device 200 may include an input/output interface 140 for communicating with a console 110, as described with respect to Figure 1. In some examples, the head-mounted display (HMD) device 200 may include a virtual reality engine (not shown), but similar to the virtual reality engine 116 described with respect to Figure 1, that may execute applications within the head-mounted display (HMD) device 200 and receive depth information, position information, acceleration information, velocity information, predicted future positions, or any combination thereof of the head-mounted display (HMD) device 200 from the various sensors.

In some examples, the information received by the virtual reality engine 116 may be used for producing a signal (e.g., display instructions) to the one or more display assemblies. In some examples, the head-mounted display (HMD) device 200 may include locators (not shown), but similar to the virtual locators 126 described in Figure 1, which may be located in fixed positions on the body 220 of the head-mounted display (HMD) device 200 relative to one another and relative to a reference point. Each of the locators may emit light that is detectable by an external imaging device. This may be useful for the purposes of head tracking or other movement/orientation. It should be appreciated that other elements or components may also be used in addition or in lieu of such locators.

It should be appreciated that in some examples, a projector mounted in a display system may be placed near and/or closer to a user's eye (i.e., "eye-side"). In some examples, and as discussed herein, a projector for a display system shaped liked eyeglasses may be mounted or positioned in a temple arm (i.e., a top far corner of a lens side) of the eyeglasses. It should be appreciated that, in some instances, utilizing a back-mounted projector placement through the folded beam scanner assembly may help to reduce size or bulkiness of any required housing required for a display system, which may also result in a significant improvement in user experience for a user.

In some examples, the projector may employ a controllable light source (e.g., a laser source) and a micro-electromechanical system (MEMS) beam scanner to create a light field from, for example, a collimated light beam. The micro-electromechanical system (MEMS) beam scanner may "paint" the image on an eye box following a biresonant coherent pattern. Various configurations of prisms, polarizer plates, and/or ghost path blocking filters may be used to fold the beam from the light source onto the waveguide at a nearly straight angle.

Figure 3A is a perspective view of a near-eye display 300 in the form of a pair of glasses (or other similar eyewear), according to an example. In some examples, the near-eye display 300 may be a specific example of near-eye display 120 of Figure 1 and may be configured to operate as a virtual reality display, an augmented reality (AR) display, and/or a mixed reality (MR) display.

In some examples, the near-eye display 300 may include a frame 305 and a display 310. In some examples, the display 310 may be configured to present media or other content to a user. In some examples, the display 310 may include display electronics and/or display optics, similar to components described with respect to Figures 1-2. For example, as described above with respect to the near-eye display 120 of Figure 1, the display 310 may include a liquid crystal display (LCD) display panel, a light-emitting diode (LED) display panel, or an optical display panel (e.g., a waveguide display assembly). In some examples, the display 310 may also include any number of optical components, such as waveguides, gratings, lenses, mirrors, etc. In other examples, the display 210 may include a projector, or in place of the display 310 the near-eye display 300 may include a projector. The projector may form an image in angular domain for direct observation by a viewer's eye by painting the image on an eye box through a micro-electromechanical system (MEMS) reflector based scanner with beam folding between the light source and the waveguide. Thus, the projector hardware may be hidden behind the frames or temples of a near-eye display device (glasses) and prevent from protruding into the world side of the glasses.

In some examples, the near-eye display 300 may further include various sensors 350a, 350b, 350c, 350d, and 350e on or within a frame 305. In some examples, the various sensors 350a-350e may include any number of depth sensors, motion sensors, position sensors, inertial sensors, and/or ambient light sensors, as shown. In some examples, the various sensors 350a-350e may include any number of image sensors configured to generate image data representing different fields of views in one or more different directions. In some examples, the various sensors 350a-350e may be used as input devices to control or influence the displayed content of the near-eye display, and/or to provide an interactive virtual reality (VR), augmented reality (AR), and/or mixed reality (MR) experience to a user of the near-eye display 300. In some examples, the various sensors 350a-350e may also be used for stereoscopic imaging or other similar application.

In some examples, the near-eye display 300 may further include one or more illuminators 330 to project light into a physical environment. The projected light may be associated with different frequency bands (e.g., visible light, infra-red light, ultra-violet light, etc.), and may serve various purposes. In some examples, the one or more illuminator(s) 330 may be used as locators, such as the one or more locators 126 described above with respect to Figures 1-2.

In some examples, the near-eye display 300 may also include a camera 340 or other image capture unit. The camera 340, for instance, may capture images of the physical environment in the field of view. In some instances, the captured images may be processed, for example, by a virtual reality engine (e.g., the virtual reality engine 116 of Figure 1) to add virtual objects to the captured images or modify physical objects in the captured images, and the processed images may be displayed to the user by the display 310 for augmented reality (AR) and/or mixed reality (MR) applications.

Figure 3B is a top view of a near-eye display 300 in the form of a pair of glasses (or other similar eyewear), according to an example. In some examples, the near-eye display 300 may include a frame 305 having a form factor of a pair of eyeglasses. The frame 305 supports, for each eye: a scanning projector 368 such as any scanning projector variant considered herein, a pupil replicating waveguide 362 optically coupled to the projector 368, an eye-tracking camera 340, and a plurality of illuminators 364. The illuminators 364 may be supported by the pupil replicating waveguide 362 for illuminating an eye box 366. The projector 368 may provide a fan of light beams carrying an image in angular domain to be projected into a user's eye. The pupil replicating waveguide 362 may receive the fan of light beams and provide multiple laterally offset parallel copies of each beam of the fan of light beams, thereby extending the projected image over the eye box 366. The coherence length of the laser sight source of the projector 368 may be less than a difference between optical path lengths of multiple light paths inside the pupil replicating waveguide 362. This may allow reduction of optical interference at the eye box 366 between portions of the image light propagated via different light paths.

In some examples, multi-emitter laser sources may be used in the projector 368. Each emitter of the multi-emitter laser chip may be configured to emit image light at an emission wavelength of a same color channel. The emission wavelengths of different emitters of the same multi-emitter laser chip may occupy a spectral band having the spectral width of the laser source. The projector 368 may include, for example, two or more multi-emitter laser chips emitting light at wavelengths of a same color channel or different color channels. For augmented reality (AR) applications, the pupil replicating waveguide 362 may be transparent or translucent to enable the user to view the outside world together with the images projected into each eye and superimposed with the outside world view. The images projected into each eye may include objects disposed with a simulated parallax, so as to appear immersed into the real-world view.

In some examples, instead of directly providing the light from multi-ridge sources (e.g., chips), light may be coupled from different chips or sources into photonic integrated circuit (PIC) waveguides (also referred to as "light channels") or via fibers, thus providing a multi-emitter source with tight ridge spacing. Such light coupling may be used in example implementations as discussed herein.

The eye-tracking camera 340 may be used to determine position and/or orientation of both eyes of the user. Once the position and orientation of the user's eyes are known, a gaze convergence distance and direction may be determined. The imagery displayed by the projector 368 may be adjusted dynamically to account for the user's gaze, for a better fidelity of immersion of the user into the displayed augmented reality scenery, and/or to provide specific functions of interaction with the augmented reality. In operation, the illuminators 364 may illuminate the eyes at the corresponding eye boxes 366, to enable the eye-tracking cameras to obtain the images of the eyes, as well as to provide reference reflections. The reflections (also referred to as "glints") may function as reference points in the captured eye image, facilitating the eye gazing direction determination by determining position of the eye pupil images relative to the glints. To avoid distracting the user with illuminating light, the latter may be made invisible to the user. For example, infrared light may be used to illuminate the eye boxes 366.

In some examples, the image processing and eye position/orientation determination functions may be performed by a central controller, not shown, of the near-eye display 300. The central controller may also provide control signals to the projectors 368 to generate the images to be displayed to the user, depending on the determined eye positions, eye orientations, gaze directions, eyes vergence, etc.

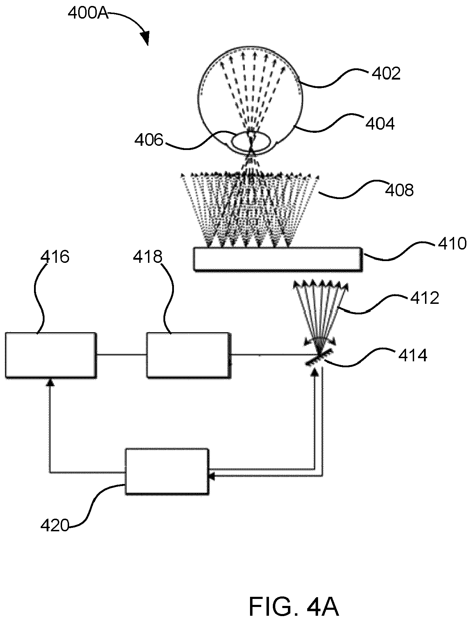

Figure 4A illustrates a schematic view of a near-eye display based on a scanning image projector, according to an example. Figure 4A shows a display device 400A including a light source 418, for example, a light-emitting diode or a laser diode, or another suitable semiconductor light source. The light source 418 may provide a light beam. An electronic driver 416 may be coupled to the light source 418 for powering the light source 418, for example, by providing a sequence of powering electric pulses. A beam scanner 414 including a tiltable reflector, for example, a micro-electromechanical system (MEMS) tiltable reflector described further below, may be optically coupled to the light source 418 for scanning the light beam generated by the light source 418. The scanning may be performed in one or two dimensions, for example, about an X-axis and/or Y-axis perpendicular to the X-axis, where X- and Y-axes are in plane of the micro-electromechanical system (MEMS) reflector at its normal (unpowered) position. A pupil replicator 410, for example, a pupil-replicating lightguide, may provide a light field 408 including multiple laterally shifted parallel portions of the scanned light beam 412. The multiple beam portions may have a same beam angle as a direction of propagation of the scanned light beam 412, at every moment of time as the light beam is scanned about one or two axes. While two-dimensional (2D) beam scanners are used as illustrative examples herein, implementations may also employ two one-dimensional (1D) beam scanners.

In some examples, a controller 420 may be coupled to the beam scanner 414 and the electronic driver 416 of the light source 418. The controller 420 may be configured to operate the electronic driver 416 to power the light source 418 in coordination with driving the beam scanner 414. For example, the controller 420 may apply a control signal to cause the beam scanner 414 to scan the light beam through a succession of beam angles or directions, while also applying a power signal to cause the electronic driver 416 to change the brightness of the light source 418 in accordance with an image to be displayed, thus forming an image in angular domain for direct observation by a viewer's eye 404 through a pupil 406. As used herein, the term "image in angular domain" means an image where different pixels of the displayed image are represented by angles of corresponding rays of image light, the rays carrying optical power levels and/or color composition corresponding to brightness and/or color values of the image pixels.

The pupil replicator 410 may provide multiple laterally displaced or laterally offset parallel portions or sub-beams of the scanned light beam 412 propagating in the same directions, as illustrated. The viewer's eye 404 may receive the light field 408 and form an image at the eye's retina 402 from the corresponding replicated sub-beams. A linear position of the beam portions on the eye's retina 402 may correspond to the beam angles or directions of the scanned light beam 408. In this manner, the eye 404 may form an image in linear domain on the eye's retina 402 from the image in the angular domain formed by the light field 408. It should be noted that in Figure 1, the beam scanner 414 and the eye are on opposite sides of the pupil replicator 410. In some examples, a projector system may illuminate the pupil replicator 410 from the eye-side. The principles described herein may also apply to non-lightguide combiners. For example, the principles of this disclosure may apply to elliptical or holographic combiners.

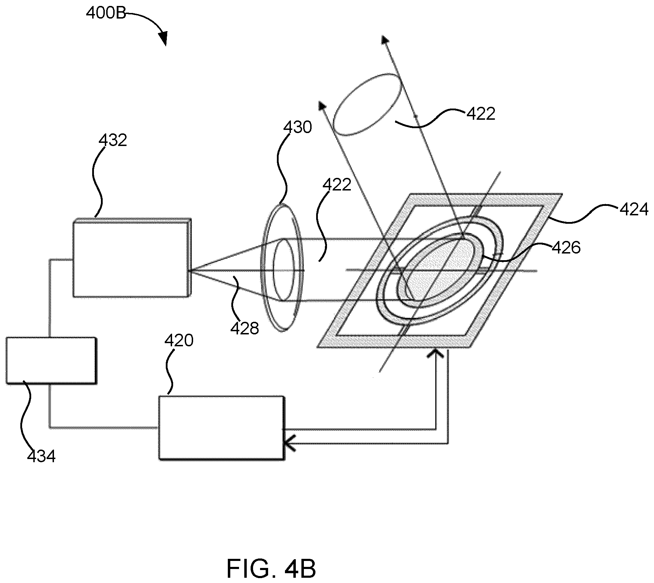

Figure 4B illustrates a schematic view of a scanning image projector of the near-eye display of FIG. 4A, where the scanning image projector uses a 2D tiltable micro-electromechanical system (MEMS) reflector, according to an example. A scanning projector 400B in Figure 4B includes a light engine 432 coupled to a beam scanner 424. The light engine 432 may include a single emitter or an array of emitters for providing a diverging light beam 428 of different brightness, color composition, etc. A collimator 430 may optically coupled to the light engine 432, to collimate the diverging light beam 428 optionally and provide a collimated light beam 422, which is optically coupled to the beam scanner 424. The collimator 430 may be a lens or any other optical component having optical power, that is, focusing or collimating power, such as a concave mirror, a diffractive lens, a folded-beam freeform optical element, etc. The reflector 426 of the beam scanner 424 may be optically coupled to the collimator 430 for receiving and angularly scanning the collimated light beam 422 to form the image in angular domain.

In some examples, the controller 420 may be operably coupled to an electronic driver 434, which is coupled to the light engine 432. The controller 420 may be coupled to the beam scanner 424 for controllable tilting of the reflector 426 through 2D micro-electromechanical system (MEMS) scanning. The electronic driver 434 may be configured to provide powering electric signals to energize different emitters of the light engine 432.

In an example operation, the controller 420 may send commands to the electronic driver 434 to energize the light engine 432 in coordination with tilting the beam scanner 424, for providing, or "painting", an image in angular domain. When viewed by a human eye, the image in angular domain is projected by the eye's cornea and lens to become a spatial-domain image on the eye's retina, as explained above. In some examples, the beam scanner 424 may be replaced with a pair of 1D tiltable mirrors, one for scanning about X-axis, and the other for scanning about Y-axis. The two 1D tiltable mirrors may be optically coupled via a pupil relay, for example. Other types of scanners may also be used. The light engine 432 may include single-mode or multimode emitters, for example and without limitation side-emitting laser diodes, vertical-cavity surface-emitting laser diodes, superluminescent light-emitting diodes, light-emitting diodes, etc.

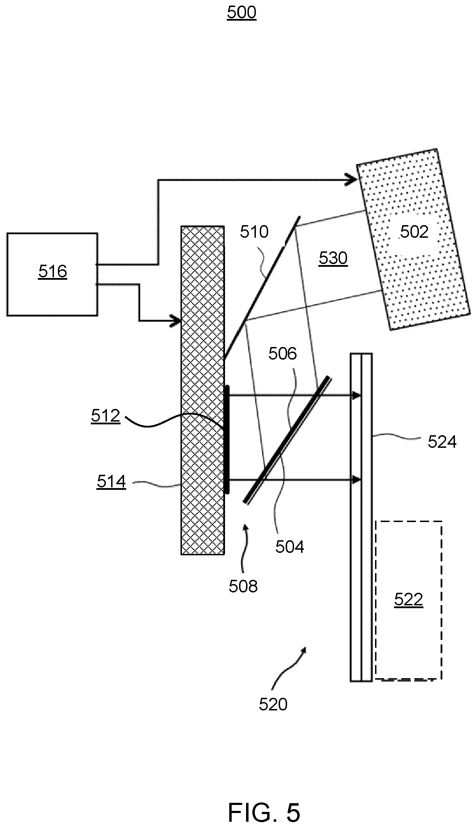

Figure 5 illustrates a side cross-sectional view of a micro-electromechanical system (MEMS) reflector based scanner including a reflective polarizer and a beam-folding mirror, according to an example. Referring to diagram 500, a beam scanner 508 may include a substrate 514 and a tiltable reflector 512 hingedly supported by the substrate 514. A reflective polarizer 504 may be supported over the tiltable reflector 512 and optically coupled to the tiltable reflector 512. A quarter-wave waveplate (QWP) 506 may be disposed in an optical path between the reflective polarizer 504 and the tiltable reflector 512. The quarter-wave waveplate (QWP) 506 may stand separately, or may be supported by the reflective polarizer 504, as shown with the latter configuration being more compact.

A projector may include a light source 502 optically coupled to the beam scanner 508. In operation, the light source 502 may emit a light beam 530 of controllable brightness, color, etc. The light beam 530 may be circularly polarized. The light beam 530 emitted by the light source 502 may impinge onto the quarter-wave waveplate (QWP) 506. The quarter-wave waveplate (QWP) 506 may be disposed and oriented to convert a circular polarization state into a linear polarization state that is reflected by the reflective polarizer 504. The reflected linearly polarized light beam 530 may propagate again through the quarter-wave waveplate (QWP) 506 and become circularly polarized. The circularly polarized light beam 530 may be reflected by the tiltable reflector 512 back towards the quarter-wave waveplate (QWP) 506. Upon a third propagation of the light beam 530 through the quarter-wave waveplate (QWP) 506, the light beam 530 may become linearly polarized at an orientation that ensures transmission of the light beam 530 through the reflective polarizer 504. The transmitted light beam 530 may propagate to a pupil replicating waveguide 524. The replicating waveguide 524 may include a single waveguide element or a stack of waveguide elements. The pupil- replicating waveguide 524 may spread the light beam 530 over an eyebox 522 of the near-eye display 520, thus carrying an image in angular domain to the eyebox 522.

A controller 516 may be operably coupled to the light source 502 and the beam scanner 508 and configured for varying the brightness and/or color of the light beam 530 in coordination with scanning the light beam 530 with the beam scanner 508. Together, the pupil replicating waveguide 524, the light source 502, and the beam scanner 508 form the near-eye display 520.

In some examples, the beam scanner 508 may further include a first folding mirror 510 in an optical path of the light beam 530 between the light source 502 and the tiltable reflector 512. The first folding mirror 510 may be supported by the substrate 514 or may extend from the substrate 514. By utilizing the first folding mirror 510 is further size reduction of the beam scanner 508 may be achieved due to the reflective polarizer 504 being disposed at a shallower angle. The light source 502 may be disposed on an opposite side of the pupil replicating waveguide 524, providing size savings for the near-eye display 520.

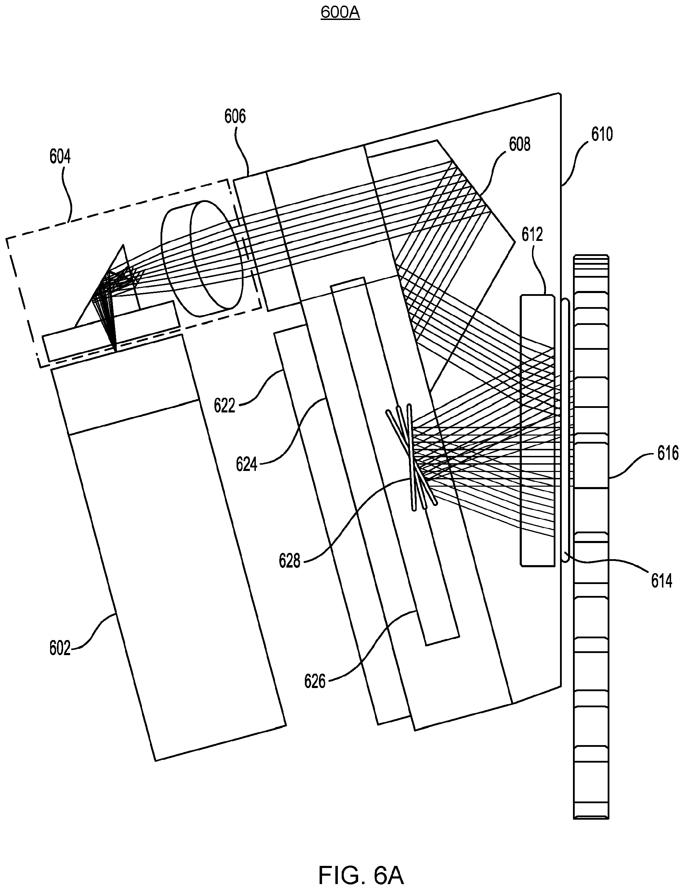

Figure 6A illustrates a side cross-sectional view of a micro-electromechanical system (MEMS) reflector based scanner including a polarizing beam splitter (PBS) and a guiding prism for routing an optical beam between the MEMS and an image-replicating waveguide, according to an example. Diagram 600A shows a light source 602 optically coupled to laser optics 604, a backside window 606 in the case of a hermerically sealed MEMS package, a guiding prism 608 in a micro-electromechanical system (MEMS) lid 610 along with a polarizing beam splitter (PBS) 612. A ghost path blocking filter 614 may be disposed on a surface of the micro-electromechanical system (MEMS) lid 610 aligned with the polarizing beam splitter (PBS) 612 and facing a pupil replicating waveguide 616. The micro-electromechanical system (MEMS) scanner may include a micro-electromechanical system (MEMS) package 624 with a substrate 626, a tiltable reflector 628 and micro-electromechanical system (MEMS) driver 622.

In some examples, light provided by the light source 602 may be redirected (e.g., 90 degrees) and spread by a prism and collimated by a collimator (e.g., a lens) within the laser optics 604. Passing through the backside window 606, the collimated light may be folded by the guiding prism 608 onto the polarizing beam splitter (PBS) 612, which may reflect the light onto the tiltable reflector 628 of the micro-electromechanical system (MEMS) scanner. The tiltable reflector 628 may provide the collimated light at near perpendicular angle to the polarizing beam splitter (PBS) 612, which may pass it through to the pupil replicating waveguide 616. The ghost path blocking filter 614 may prevent light following ghost paths from being passed through to the pupil replicating waveguide 616.

Accordingly, a modified beam path that is tailored to make the assembly more compact, as well shorten the distance between the micro-electromechanical system (MEMS) scanner and the pupil replicating waveguide may be provided. The guiding prism 608 mounted close the micro-electromechanical system (MEMS) scanner may help achieve the reduction in distance. Furthermore, a special optical filter that blocks ghost path light that may otherwise leak through the polarizing beam splitter (PBS) may be used. The ghost path blocking filter may be implemented as a volume Bragg grating (VBG) filter laminated onto the polarizing beam splitter (PBS).

In some examples, a laser or non-laser light source may be used in the projection and include side-emitting laser diodes, vertical-cavity surface-emitting laser diodes, superluminescent light-emitting diodes, light-emitting diodes, and similar ones. The light source 602 may also be single or multi-color and multi-emitter laser diode sources, as well as photonic integrated circuits "PICs".

Optical elements in the example micro-electromechanical system (MEMS) reflector based scanner may include one or more optical elements (e.g., prisms, optical lenses, etc.) to pre-condition and collimate the laser light. The optical elements may also be used to mix/combine red, blue, and green colors. Some elements may be used for color filtering, while others may be used for polarization filtering or polarization compensation. The scanner may also include optional beam monitoring elements, interlock hardware, and similar components.

In some examples, the micro-electromechanical system (MEMS) package 624 may be a layered ceramic component with electrical feedthroughs and may house a micro-electromechanical system (MEMS) chip in a vacuum. The micro-electromechanical system (MEMS) package 624 may interface to the micro-electromechanical system (MEMS) lid 610 assembly, the backside window 606, and the micro-electromechanical system (MEMS) driver 622. The micro-electromechanical system (MEMS) lid 610 may be a structure to maintain a hermetic vacuum environment for the micro-electromechanical system (MEMS) chip to operate inside. The backside window 606 may allow laser light to enter the micro-electromechanical system (MEMS) package 624. The backside window 606 may also be hermetically sealed and include anti-reflective coating in some implementations.

The guiding prism 608 may bounce the laser beam through the micro-electromechanical system (MEMS) package 624 to maintain a low thickness profile for the scanner assembly. The guiding prism 608 may include planar or curved surfaces, special reflective and/or anti-reflective coatings, etc. In some implementations, vacuum pressure inside the micro-electromechanical system (MEMS) package 624 may be about 0 to 0.3 atmosphere, and a collimated beam size entering the micro-electromechanical system (MEMS) package 624 may be about 1 - 2 mm.

In some examples, the polarizing beam splitter (PBS) 612 may include a glass substrate plate sealed to the micro-electromechanical system (MEMS) lid 610 to be able to hold the vacuum environment. The glass substrate plate may be coated or laminated with special films to fold the laser beam path. Additional outer films may form the ghost path blocking filter 614 to prevent ghost leakage light from reaching the pupil replicating waveguide 616.

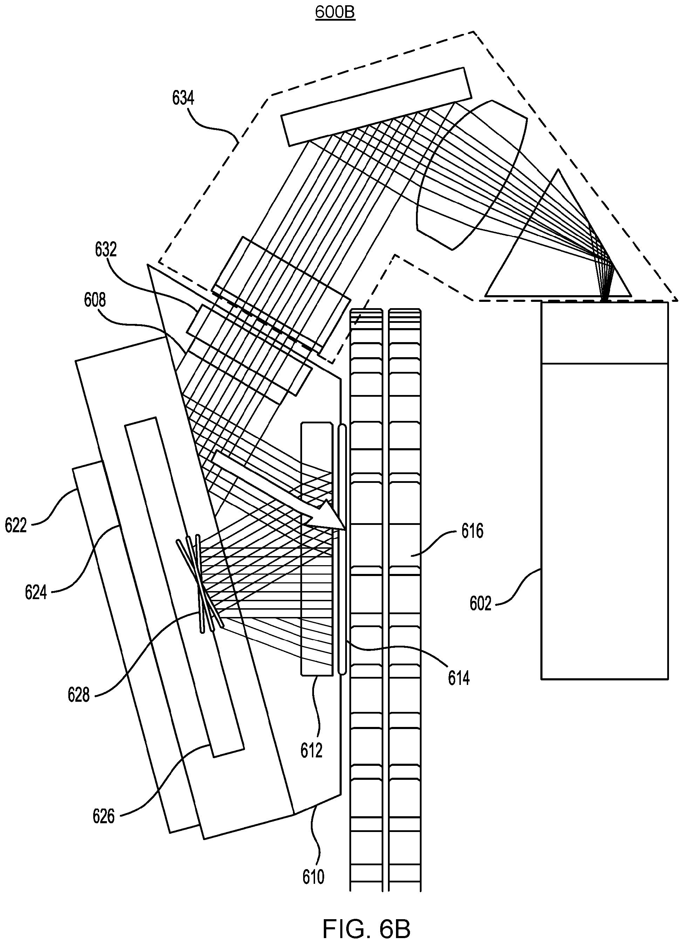

Figure 6B illustrates a side cross-sectional view of a micro-electromechanical system (MEMS) reflector based scanner including a polarizing beam splitter (PBS), a guiding prism, and a beam-folding mirror for routing an optical beam around an image-replicating waveguide, according to an example. Diagram 600B shows the light source 602 optically coupled to laser collimation and folding optics 634, an entrance window 632, the guiding prism 608 in the micro-electromechanical system (MEMS) lid 610 along with the polarizing beam splitter (PBS) 612. The ghost path blocking filter 614 may be disposed on a surface of the micro-electromechanical system (MEMS) lid 610 aligned with the polarizing beam splitter (PBS) 612 and facing the pupil replicating waveguide 616. The micro-electromechanical system (MEMS) scanner may include the micro-electromechanical system (MEMS) package 624 with the substrate 626, the tiltable reflector 628 and the micro-electromechanical system (MEMS) driver 622.

In some examples, light provided by the light source 602 may be spread, redirected, and collimated by the optical elements of the laser collimation and folding optics 634. The laser collimation and folding optics 634 may further include components to mix/combine red, blue, and green colors, for color filtering, and for polarization filtering or polarization compensation. Passing through the entrance window 632, the collimated light may be folded by the guiding prism 608 onto the polarizing beam splitter (PBS) 612, which may reflect the light onto the tiltable reflector 628 of the micro-electromechanical system (MEMS) scanner. The tiltable reflector 628 may provide the collimated light at near perpendicular angle to the polarizing beam splitter (PBS) 612, which may pass it through to the pupil replicating waveguide 616. The ghost path blocking filter 614 may prevent light following ghost paths from being passed through to the pupil replicating waveguide 616.

The micro-electromechanical system (MEMS) reflector based scanner in diagram 600B may be mounted on a world side (outside of the temples of the AR/VR glasses) because the structure with the waveguide having two or more plates may allow the scanner to be flipped. In this configuration, the laser source may stay on the eye side (inside the glasses) allowing it to be hidden behind the temples (and frame) of the AR/VR glasses.

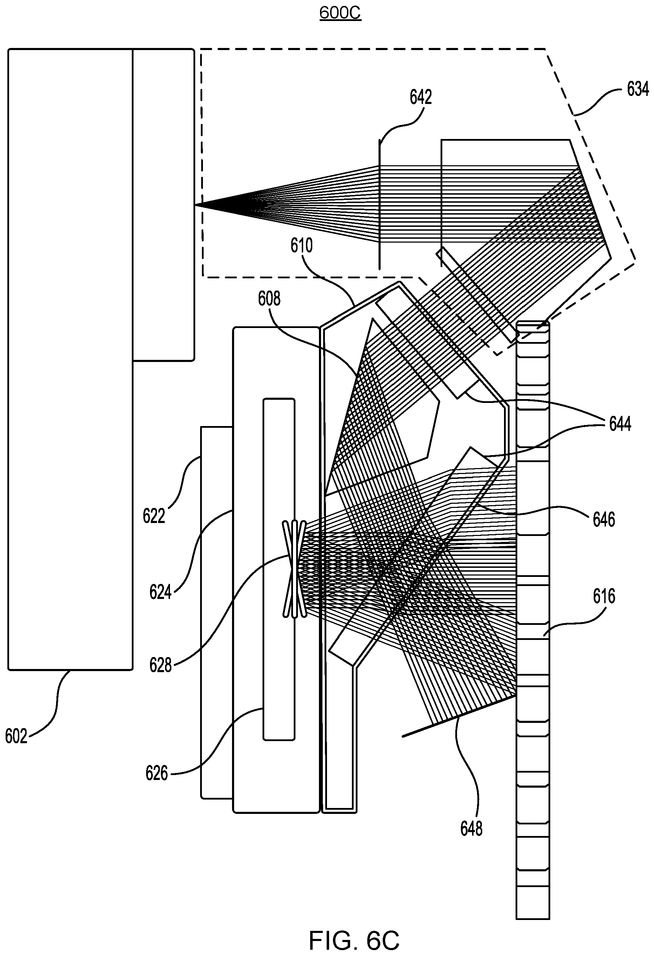

Figure 6C illustrates a side cross-sectional view of a micro-electromechanical system (MEMS) reflector based scanner including a polarizing beam splitter (PBS), two mirrors, and two prisms for routing an optical beam around an image-replicating waveguide, according to an example. Diagram 600C shows the light source 602 optically coupled to laser collimation and folding optics 634. The laser collimation and folding optics 634 may include a fast-axis collimating (FAC) lens 642 and a folding prism. The fast-axis collimating (FAC) lens is an optical lens that collimates light spreading from a laser in the fast-axis direction. The folding prism may direct the collimated light through an exit face into the micro-electromechanical system (MEMS) lid 610 through one of two vacuum windows 644. The guiding prism 608 in the micro-electromechanical system (MEMS) lid 610 may direct the light beam to a second one of the two vacuum windows 644. A surface of the second one of the two vacuum windows 644 facing the pupil replicating waveguide 616 may be coated or laminated with polarizer films 646. The polarizer films 646 may direct the incoming beam onto the tiltable reflector 628 of the micro-electromechanical system (MEMS) package 624, which may reflect the light beam back to the second one of the two vacuum windows 644 and allow it to pass through to the pupil replicating waveguide 616. A beam dump 648 may receive leakage path light.

In the configuration of diagram 600C, increasing a tilt of the second (diagonal) window with the polarization films may bring the leakage path off the waveguide and into a physical beam block/dump. This configuration may obviate a need for the ghost blocker filter while increasing an overall projector size and a distance between the micro-electromechanical system (MEMS) package and the waveguide.

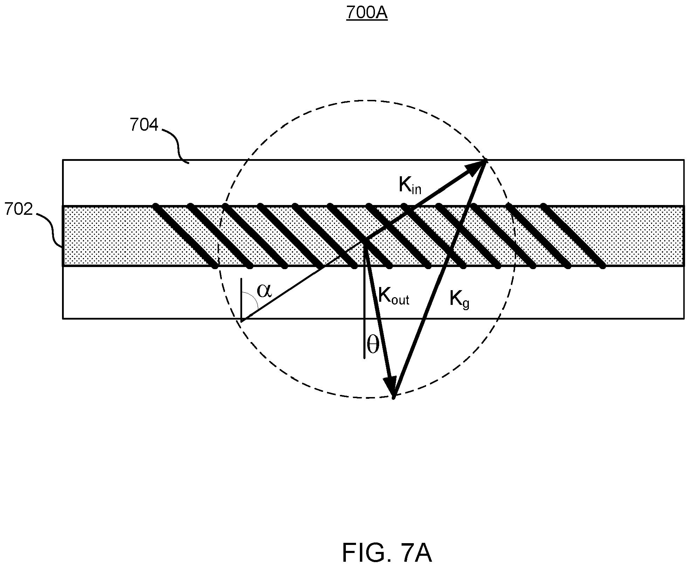

Figure 7A illustrates a volume Bragg grating (VBG), according to an example. Diagram 700A shows volume Bragg gratings (VBG) 702 within substrate 704, which may be glass or crystal materials in some examples.

Volume Bragg gratings are Bragg gratings which are written inside a transparent material, for example, in form of a cube or a parallelepiped within glass, in contrast to diffraction gratings made on the surface of an optical element or fiber Bragg gratings, where the grating is written into the core of an optical fiber. In some implementations, such gratings may be written into photopolymers, photosensitive glass or crystalline materials.

A volume Bragg grating (VBG) only diffracts near or at Bragg conditions, where Kin - Kg = Kout, Kg being the grating vector. An absolute value of Kin (|Kin|) may be expressed as 2□/□. In a filter application, reflection grating saturation may be controlled to modify a 0th order strength and wavelength/angle selectivity bandwidth. More saturation may lead to high peak efficiency and wider bandwidth of a volume Bragg grating (VBG) notch filter.

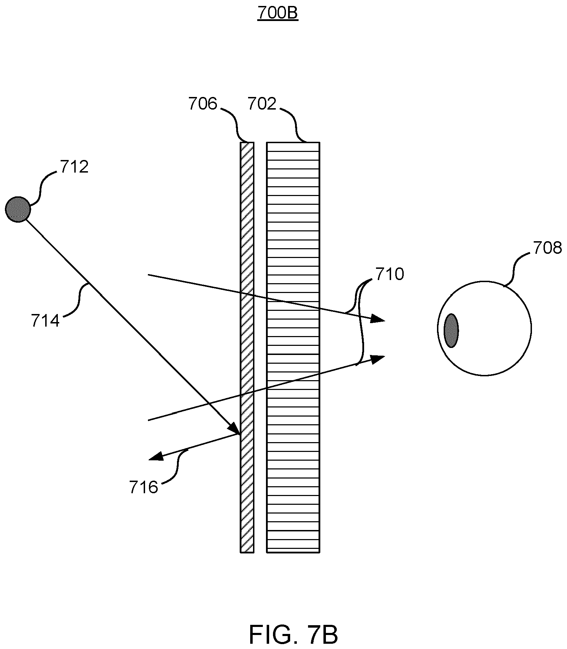

Figure 7B illustrates a volume Bragg grating (VBG) notch filter to block ghost path rays, according to an example. Diagram 700B shows light following a ghost path 714 from a source 712 being deflected by a volume Bragg grating (VBG) notch filter 706 onto a path 716 away from a pupil replicating waveguide 702, whereas light intended for the eye 708 arriving at the pupil replicating waveguide 702 at sharper angles passing through as light 710 toward the eye 708.

In some examples, a micro-electromechanical system (MEMS) scanner may provide light for a designed field of view (FOV) of a projector, but also light following ghost paths at shallower angles. The volume Bragg grating (VBG) notch filter 706 placed in front of the micro-electromechanical system (MEMS) scanner may block such ghost path rays without impacting the designed field of view (FOV). To capture all ghost paths, the volume Bragg grating (VBG) notch filter 706 may be positioned close to the pupil replicating waveguide.

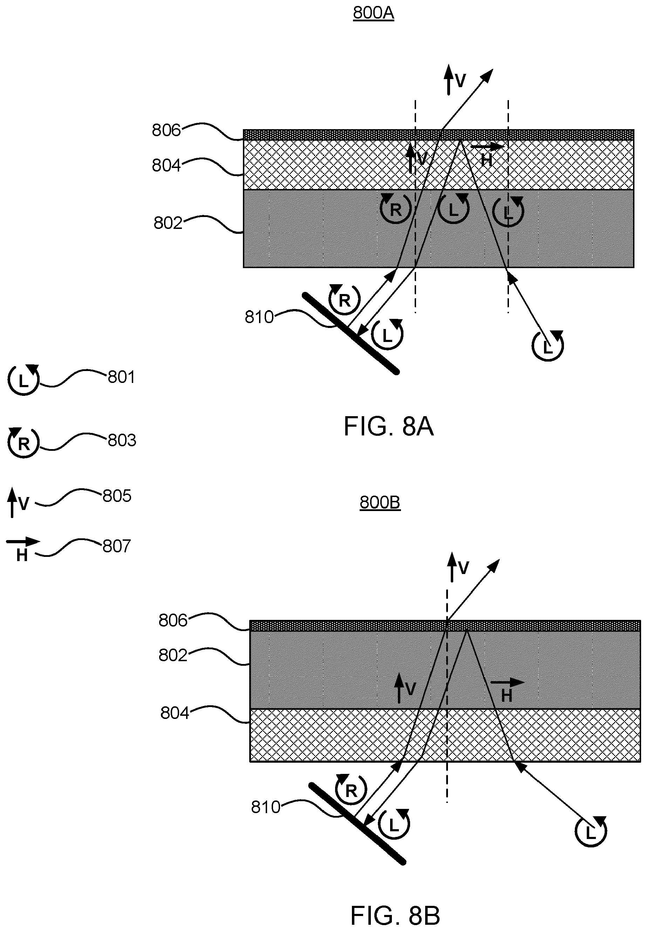

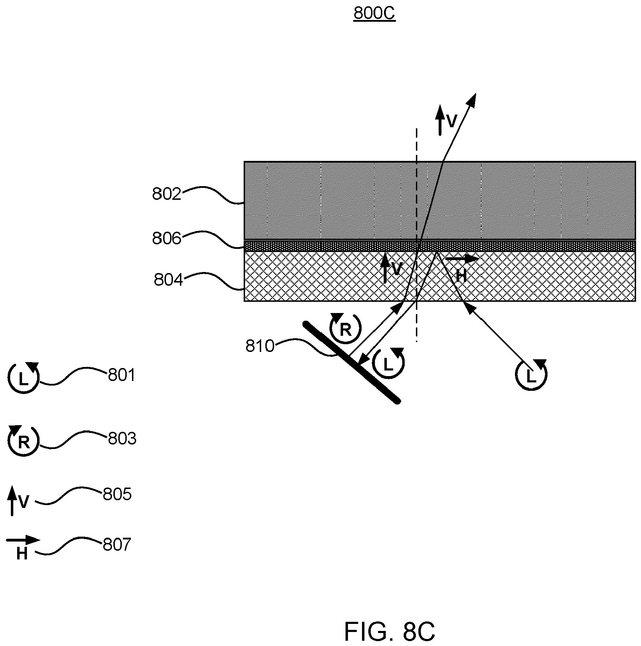

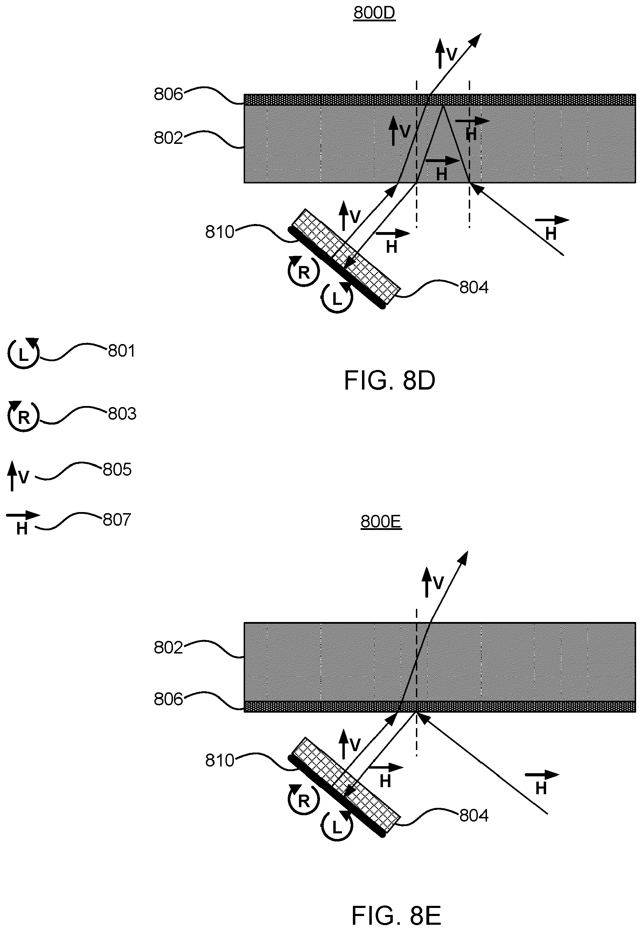

Figures 8A-8E illustrate different configurations of a quarter wave plate (QWP), a reflective polarizer, and a micro-electromechanical system (MEMS) mirror, according to examples.

Example configurations discussed herein are directed to reducing a distance between the micro-electromechanical system (MEMS) package and the waveguide for improved coupling efficiency. Example configurations do not require perfect anti-reflective coatings or polarization components. Unscanned ghost signals may cause performance reduction. Thus, any visible unscanned ghost beams may need to be reduced to less than 10^-5 in brightness. A polarization compensation plate requires circular polarization reaching the reflective polarizer but may need compensation elements for purity of the circularly polarized beam by the time it reaches the reflective polarizer and its reflective films.

For the polarization films or coatings needed on the diagonal window (second window 644) and/or the micro-electromechanical system (MEMS) device, a quarter wave plate (QWP) 804 and a reflective polarizer (RP) 806 may be needed along with a substrate 802. Diagrams 800A through 800E depict polarizations of various incoming and reflected beams for different configurations. The polarizations in the diagrams are left hand circular polarization 801, right hand circular polarization 803, vertical linear polarization 805, and horizontal linear polarization 807.

Diagram 800A shows a configuration with an order of layers including the substrate 802, the quarter wave plate (QWP) 804, and the reflective polarizer (RP) 806. A left hand circularly polarized beam may arrive at and pass through the substrate 802 and pass through the quarter wave plate (QWP) 804 as horizontal linear polarized beam, which gets reflected at the reflective polarizer (RP) 806 as a horizontal linear polarized beam. The reflected beam may pass through the substrate 802 as a left hand circularly polarized beam arrive at the micro-electromechanical system (MEMS) device 810 and be reflected back to the substrate 802 as a right hand circularly polarized beam. The beam may pass through the substrate 802 with right hand circular polarization and reach the reflective polarizer (RP) 806 with vertical linear polarization. The beam may pass through the reflective polarizer (RP) 806 as a vertical linear polarized beam toward the waveguide.

Diagram 800B shows a configuration with an order of layers including the quarter wave plate (QWP) 804, the substrate 802, and the reflective polarizer (RP) 806. A left hand circularly polarized beam may arrive at and pass through the quarter wave plate (QWP) 804 becoming a horizontal linear polarization and pass through the substrate 802. The horizontal linear polarized beam then gets reflected at the reflective polarizer (RP) 806 as a horizontal linear polarized beam. The reflected beam may pass through the substrate 802 and pass through and leave the quarter wave plate (QWP) 804 as a left hand circularly polarized beam to arrive at the micro-electromechanical system (MEMS) device 810 and be reflected back to the quarter wave plate (QWP) 804 as a right hand circularly polarized beam. The beam may pass through the quarter wave plate (QWP) 804 and reach the substrate 802 as vertical linear polarized beam. The vertical linear polarized beam may pass through the reflective polarizer (RP) 806 toward the waveguide.

Diagram 800C shows a configuration with an order of layers including the quarter wave plate (QWP) 804, the reflective polarizer (RP) 806, and the substrate 802. A left hand circularly polarized beam may arrive at and pass through the quarter wave plate (QWP) 804 being converted to a horizontal linear polarized beam be reflected at the reflective polarizer (RP) 806 passing through the quarter wave plate (QWP) 804 and arriving at the micro-electromechanical system (MEMS) device 810 as left hand circularly polarized beam. The micro-electromechanical system (MEMS) device 810 may reflect the beam back as a right hand circularly polarized beam, which becomes horizontal linear polarized beam passing through the quarter wave plate (QWP) 804, the reflective polarizer (RP) 806, and the substrate 802 with vertical linear polarization toward the waveguide.

Diagram 800D shows a configuration, where the quarter wave plate (QWP) 804 is disposed on the micro-electromechanical system (MEMS) device 810 with an order of layers including the substrate 802 and the reflective polarizer (RP) 806. A horizontal linear polarized beam may arrive at and pass through the substrate 802 and be reflected by the reflective polarizer (RP) 806 as a horizontal linear polarized beam. The reflected beam may pass through the substrate 802 as a horizontal linear polarized beam arrive at the micro-electromechanical system (MEMS) device 810 and be reflected back to the substrate 802 as a vertical linear polarized beam. At the micro-electromechanical system (MEMS) device 810, the horizontal linear polarized beam may be converted to a left hand circularly polarized beam by the quarter wave plate (QWP) 804, be reflected as right hand circularly polarized beam and converted to vertical linear polarized beam by the quarter wave plate (QWP) 804. The vertical linear polarized beam may pass through the substrate 802 and the reflective polarizer (RP) 806 with vertical linear polarization toward the waveguide.

Diagram 800E shows a configuration, where the quarter wave plate (QWP) 804 is disposed on the micro-electromechanical system (MEMS) device 810 with an order of layers including the reflective polarizer (RP) 806 and the substrate 802. A horizontal linear polarized beam may arrive at and be reflected with same polarization by the reflective polarizer (RP) 806. The reflected beam may pass through the quarter wave plate (QWP) 804 being converted to a left hand circularly polarized beam and reflected as right hand circularly polarized beam passing through the quarter wave plate (QWP) 804 again as vertical linear polarized beam. The vertical linear polarized beam may pass through the reflective polarizer (RP) 806 and the substrate 802 with vertical linear polarization toward the waveguide.

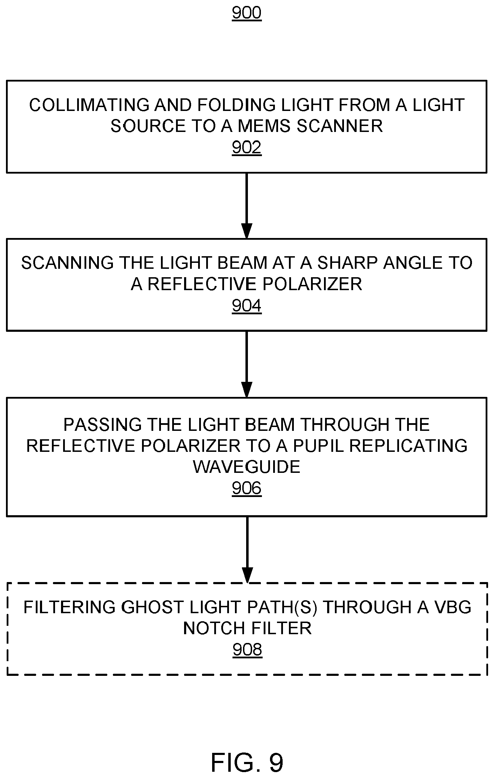

Figure 9 is a flow diagram illustrating an example method for providing collimated and folded light to a pupil replicating waveguide through a micro-electromechanical system (MEMS) reflector based scanner, according to some examples. The method 900 is provided by way of example, as there may be a variety of ways to carry out the method described herein. Although the method 900 is primarily described as being performed by the components of Figures 6A through 6C, the method 900 may be executed or otherwise performed by one or more processing components of another system or a combination of systems. Each block shown in Figure 9 may further represent one or more processes, methods, or subroutines, and one or more of the blocks (e.g., the selection process) may include machine readable instructions stored on a non-transitory computer readable medium and executed by a processor or other type of processing circuit to perform one or more operations described herein.

At block 902, light from a light source such as laser light from a laser source may be collimated and folded through optical elements and directed to a micro-electromechanical system (MEMS) reflector based scanner. The optical elements may include prisms, optical lenses, etc. to pre-condition and collimate the laser light. The optical elements may also be used to mix/combine red, blue, and green colors. Some elements may be used for color filtering, while others may be used for polarization filtering or polarization compensation.

At block 904, the micro-electromechanical system (MEMS) reflector based scanner may reflect the laser beam at a sharp angle to a reflective polarizer, for example, perpendicular to a planar surface of the reflective polarizer. In some examples, a quarter wave plate (QWP) and a substrate may also be used along with the reflective polarizer, where polarization of the laser beam may be modified at various stages to allow vertical linear polarized light to be forwarded to the pupil replicating waveguide.

At block 906, the laser beam may be passed through the reflective polarizer (vertical linear polarization) to the pupil replicating waveguide. Thus, an output (scanned) light beam may be spatially separated from the input optical beam by polarization. The separation obviates a need in geometrical separation of the beams by oblique angles of incidence, resulting in a compact configuration providing a nearly straight angle of incidence at the tiltable reflector when the reflector is in a center (non-tilted) angular position.

At optional block 908, ghost light paths that may cause undesirable lights to be passed through to the pupil replicating waveguide may be blocked by a ghost path blocking filter. In some examples, a volume Bragg grating (VBG) notch filter may be used to block ghost paths.

According to examples, a method of making a micro-electromechanical system (MEMS) reflector based scanner with folded light paths is described herein. A system of making the micro-electromechanical system (MEMS) reflector based scanner is also described herein. A non-transitory computer-readable storage medium may have an executable stored thereon, which when executed instructs a processor to perform the methods described herein.

In the foregoing description, various examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

## Claims

1. An apparatus, comprising:
a light source to provide an input light beam;
a two-dimensional, 2D, beam scanner optically coupled to the light source, the 2D beam scanner to:
receive the input light beam;
perform a biresonant scan of the input light beam; and
generate a light field based on the biresonant scan;
an optical assembly comprising a plurality of optical elements, the optical elements to collimate and fold the input light beam toward the 2D beam scanner; and
a reflective polarizer to receive the scanned light beam from the 2D beam scanner and to provide to a pupil replicating waveguide.

2. The apparatus of claim 1, wherein the 2D beam scanner is a micro-electromechanical system, MEMS, reflector based scanner.

3. The apparatus of claim 1 or 2, further comprising:
a quarter wave plate, QWP, to modify a polarization of the scanned light beam.

4. The apparatus of claim 3, wherein the reflective polarizer and the QWP are arranged as one of:
a substrate, the QWP, and the reflective polarizer;
the QWP, the substrate, and the reflective polarizer; or
the QWP, the reflective polarizer, and the substrate;
preferably wherein an arrangement of the substrate, the QWP, and the reflective polarizer is to receive a left hand circularly polarized light beam and provide a vertical linear polarized light beam to the pupil replicating waveguide.

5. The apparatus of claim 3 or 4, wherein the QWP is disposed on a surface of a tiltable reflector of a micro-electromechanical system, MEMS, reflector based scanner and the reflective polarizer is arranged with a substrate aligned with a planar surface of the pupil replicating waveguide;
preferably wherein an arrangement of the substrate, the QWP, and the reflective polarizer is to receive a horizontal linear polarized light beam and provide a vertical linear polarized light beam to the pupil replicating waveguide.

6. The apparatus of any preceding claim, further comprising:
a ghost path blocking filter positioned in an optical path between the reflective polarizer and the pupil replicating waveguide to block light following at least one ghost path from the 2D beam scanner to the pupil replicating waveguide.

7. The apparatus of any preceding claim, wherein the optical assembly comprises at least one guiding prism to fold the input light beam and at least one collimating lens to collimate the input light beam.

8. The apparatus of any preceding claim, wherein the light source comprises one of a side-emitting laser diode, a vertical-cavity surface-emitting laser diode, a superluminescent light-emitting diode, a light-emitting diode, or a photonic integrated circuit.

9. A near-eye display device, comprising:
a pupil replicating waveguide to provide an image on an eye box;
a projector optically coupled to the pupil replicating waveguide, the projector comprising the apparatus of any preceding claim.

10. The near-eye display device of claim 9, wherein the light source, the 2D beam scanner, and the optical assembly are arranged to be placed on an eye side surface of at least one temple of the near-eye display device.

11. The near-eye display device of claim 9 or 10, wherein the light source, the 2D beam scanner, and the optical assembly are arranged such that the 2D beam scanner is placed on a world side surface of at least one temple of the near-eye display device and the light source and the optical assembly are placed on an eye side surface of the at least one temple of the near-eye display device.

12. The near-eye display device of any of claims 9 to 11, wherein the optical assembly comprises:
a first diagonal window to receive the folded input light beam from a first guiding prism and to provide to a second guiding prism; and
a second diagonal window to provide the folded input light beam from the second guiding prism to the 2D beam scanner and to pass through the light beam reflected by the 2D beam scanner to the pupil replicating waveguide;
preferably wherein the reflective polarizer is disposed on a surface of the second diagonal window facing the pupil replicating waveguide.

13. A method, comprising:
generating an input light beam at a light source of a scanning projector;
collimating and folding the input light beam toward a reflector of a micro-electromechanical system, MEMS, reflector based scanner;
scanning the light beam, at MEMS reflector based scanner, about a first axis and a second axis while varying a brightness of the input light beam;
passing the scanned light beam through a reflective polarizer to a pupil replicating waveguide; and
generating a light field on an eye box through the scanned light beam, by the pupil replicating waveguide, to provide an image to a viewer through the eye box.

14. The method of claim 13, further comprising:
blocking ghost path rays by a volume Bragg grating, VBG, notch filter disposed between the reflective polarizer and the pupil replicating waveguide.

15. The method of claim 13 or 14, further comprising:
modifying a polarization of the scanned light beam at a quarter wave plate, QWP.
